# EUROPEAN PATENT SPECIFICATION

(11) **EP 3 373 513 B1**
(45) Date of publication and mention of the grant of the patent: **19.06.2019**
(21) Application number: 17187557.8
(22) Date of filing: 23.08.2017
(51) Int. Cl.: H04L 12/18

(54) **METHOD FOR MONITORING BROADCAST MESSAGE AND TERMINAL**
VERFAHREN ZUR ÜBERWACHUNG EINER GESENDETEN NACHRICHT UND ENDGERÄT
PROCÉDÉ DE SURVEILLANCE DE MESSAGE DE DIFFUSION ET TERMINAL

(30) Priority: 10.03.2017 CN 201710142302
(43) Date of publication of application: 12.09.2018
(73) Proprietor: Guangdong Oppo Mobile Telecommunications Corp., Ltd, Dongguan, Guangdong 523860 (CN)
(72) Inventor: PEI, Runsheng, Chang'an Dongguan, Guangdong (CN); FU, Liangjing, Chang'an Dongguan, Guangdong (CN); LIN, Zhiyong, Chang'an Dongguan, Guangdong (CN); WU, Ruyu, Chang'an Dongguan, Guangdong (CN); ZHANG, Jun, Chang'an Dongguan, Guangdong (CN)
(74) Representative: Mewburn Ellis LLP

(56) References cited:
- WO-A1-01/33373
- US-A1- 2005 271 037
- US-A1- 2009 245 415
- US-A1- 2013 159 869

## Description

### TECHNICAL FIELD

The present disclosure relates to terminals, and particularly to a method for monitoring broadcast messages and a terminal.

### BACKGROUND

Different operating systems are widely used in terminals such as smart phones, tablet computers, and so on. For the terminals having the Android system, multiple applications may be installed. The Android system employs a broadcast mechanism to speed broadcast transmission among different applications. That is, broadcast messages sent by senders (e.g., third-party applications) are placed onto a message queue according to time of sending the broadcast messages, and then distributed to a corresponding receiver (e.g., a third-party application) sequentially. Thus, when the message queue includes many broadcasts, the broadcast at the rear of the message queue may be distributed to the corresponding receiver after waiting for a long time. When the broadcast message at the rear is sent by an application which is currently operated, waiting for a long time may affect user operation.

US 20050271037 A1 relates to a message portal for administering and controlling the exchange of vehicle-related messages between a remote location and a vehicle.

WO 01/33373 A1 relates to an audio queue management system in which requests from client terminals are queued so that each broadcast can be made in an ordered manner.

### SUMMARY

The present disclosure provides a method for monitoring broadcast messages as set out in claim 1 and a terminal as set out in claim 7, which can increase the response speed for broadcast messages sent by a currently operated application.

In a first aspect, a method for monitoring broadcast messages is provided. The method may include monitoring broadcasting, and placing a broadcast message onto a message queue in a queue-jumping manner based on that the broadcast message is sent by a currently operated sender. The message queue is corresponding to a receiver which needs to receive the broadcast message. Broadcast messages in the message queue are distributed to the receiver sequentially.

In a second aspect, a terminal is provided. The terminal may include a memory and a processor. The memory is configured to store computer-readable program codes. The processor is configured to invoke the computer-readable program codes to perform following acts: monitoring broadcasting; and placing a broadcast message onto a fixed position of a message queue based on that the broadcast message is sent by a currently operated sender. The fixed position is a position before the rear of the message queue. The message queue is corresponding to a receiver which needs to receive the broadcast message. Broadcast messages of the message queue are distributed to the receiver sequentially.

In a third aspect, a terminal is provided. The terminal may include a memory and a processor. The memory is configured to store computer-readable program codes. The processor is configured to invoke the computer-readable program codes to perform following acts: monitoring broadcasting; and placing a broadcast message onto a message queue in a queue-jumping manner based on that the broadcast message is sent by a currently operated sender. The message queue is corresponding to a receiver which needs to receive the broadcast message. Broadcast messages in the message queue are distributed to the receiver sequentially.

In the present disclosure, broadcast messages sent by the currently operated application are not placed at the rear of the message queue, thereby increasing the response speed for the broadcast messages sent by the currently operated application.

### BRIEF DESCRIPTION OF THE DRAWINGS

In order to illustrate the technical solutions of the embodiments of the present disclosure more clearly, the drawings used in the description of the embodiments will be briefly described, it will be apparent that the drawings described in the following are embodiments of the present disclosure, and it will be apparent to those skilled in the art that other drawings can be obtained from the drawings without any creative work.
FIG. 1 is a flow chart of a method for monitoring broadcast messages in accordance with an embodiment of the present disclosure.
FIG. 2 is a flow chart of a method for monitoring broadcast messages in accordance with another embodiment of the present disclosure.
FIG. 3 is a block diagram of a terminal in accordance with an embodiment of the present disclosure.
FIG. 4 is a structural diagram of a terminal in accordance with an embodiment of the present disclosure.

### DETAILED DESCRIPTION OF ILLUSTRATED EMBODIMENTS

In order to illustrate the technical solutions of the present disclosure or the related art more clearly, a brief description of the accompanying drawings used herein is given below. Obviously, the drawings listed below are only examples, and a person skilled in the art should be noted that, other drawings can also be obtained on the basis of these exemplary drawings without creative work.

In the following description, numerous specific details are set forth in order to facilitate a thorough understanding of the present disclosure, however, the present disclosure can be practiced otherwise than as specifically described herein, and therefore, the scope of the present disclosure is not to be limited by the specific embodiments disclosed below.

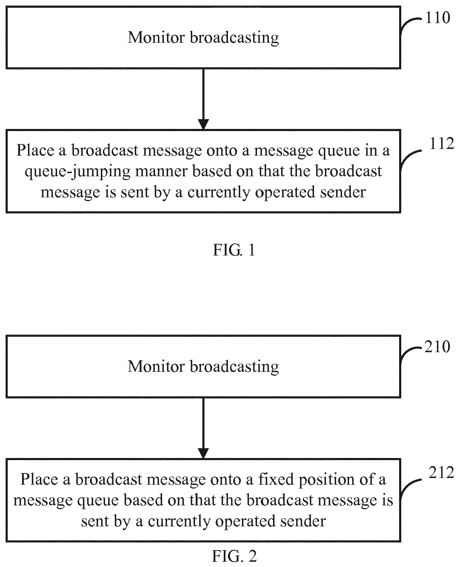

FIG. 1 is a flow chart of a method for monitoring broadcast messages in accordance with an embodiment of the present disclosure. The method may be executed by a terminal such as a smart phone, a tablet computer, and so on. As illustrated in FIG. 1, the method may include the follows.

At block 110, broadcasting is monitored.

Broadcast messages may be sent by senders of the terminal. The senders may be third-party applications installed in the terminal or system applications such as an alarm clock application, a calendar application, a camera application, and so on. Broadcast messages may be an unlocking broadcast message, a network switch broadcast message, a language switch broadcast message, and so on.

Broadcasting may be monitored by activity manager service (AMS) of the terminal. The AMS is in charge of register of receivers and distribution of broadcast messages. When a sender sends a broadcast message to the AMS, the AMS determines a receiver which needs to receive the broadcast message, and then places the broadcast message onto a message queue corresponding to the receiver. When it is time to distribute the broadcast message, the AMS distributes the broadcast message to the receiver.

At block 112, a broadcast message is placed onto a message queue in a queue-jumping manner based on that the broadcast message is sent by a currently operated sender. The message queue is corresponding to a receiver which needs to receive the broadcast message, and broadcast messages of the message queue are distributed to the receiver sequentially.

When a broadcast message is sent, a sender which sends the broadcast is determined, and then a current display interface of the terminal is acquired. When it is determined that the current display interface is a display interface of the sender, it is determined that the sender is currently operated, for example, the sender may be a third-party application currently operated by a user. When it is determined that the current display interface is not a display interface of the sender, it is determined that the sender is not currently operated, for example, the sender may be a system application such as a calendar application.

In at least one implementation manner, placing the broadcast message onto the message queue in the queue-jumping manner may include that placing the broadcast message onto a position next to the front of the message queue. Thus, after the broadcast message at the front is distributed to the receiver, the broadcast message sent by the currently operated sender will be distributed to the receiver subsequently. Accordingly, the response speed for the broadcast message sent by the currently operated sender is increased, thereby improving user operation.

In at least one alternative implementation manner, placing the broadcast message onto the message queue in the queue-jumping manner may include that placing the broadcast message onto a position other than the front and the rear of the message queue. That is, the broadcast message can be placed onto any position between the front and the rear of the message queue. For example, when the message queue includes a broadcast message 1 at the front, a broadcast message 2 next to the broadcast message 1, a broadcast message 3 next to the broadcast message 2, ..., and a broadcast message N at the rear, the broadcast message can be placed onto a position after the broadcast message 2 and before the broadcast message 3. Since the broadcast message sent by the currently operated sender is not placed onto the rear of the message queue, the response speed for the broadcast message is also increased, thereby improving user operation.

In at least one alternative implementation manner, placing the broadcast message onto the message queue in the queue-jumping manner may include that placing the broadcast message onto a position next to another broadcast message of the message queue which has been sent by the currently operated sender prior to sending of the broadcast message. The currently operated sender may have sent another broadcast message prior to sending of the broadcast message, and the other broadcast message may still wait for distribution. Thus, when the currently operated sender further sends a broadcast message at current time, the broadcast message may be arranged to be next to the other broadcast message which has been sent by the currently operated sender prior to sending of the broadcast message. Thus, the arrangement of the broadcast message may not affect distribution of the other broadcast message sent prior to sending of the broadcast message, and the response speed for the broadcast message is also increased.

In at least one alternative embodiment, the method may further include that placing the broadcast message onto the rear of the message queue based on that the broadcast message is not sent by the currently operated sender, whereby the broadcast message becomes a broadcast message at the rear of the message queue.

FIG. 2 is a flow chart of a method for monitoring broadcast messages in accordance with another embodiment of the present disclosure. The method may include the follows.

At block 210, broadcasting is monitored. The operation at block 210 may correspond to the operation at block 110.

At block 212, a broadcast message is placed onto a fixed position of a message queue based on that the broadcast message is sent by a currently operated sender. The fixed position of the message queue is a position before the rear of the message queue. The message queue is corresponding to a receiver which needs to receive the broadcast message, and broadcast messages of the message queue are distributed to the receiver sequentially.

In at least one implementation manner, the fixed position is a position next to the front of the message queue. Thus, after the broadcast message at the front is distributed to the receiver, the broadcast message sent by the currently operated sender will be distributed to the receiver subsequently. Accordingly, the response speed for the broadcast message sent by the currently operated sender is increased, thereby improving user operation.

In at least one alternative implementation manner, the fixed position is a position other than the front and the rear of the message queue. For example, when the message queue includes a broadcast message 1 at the front, a broadcast message 2 next to the broadcast message 1, a broadcast message 3 next to the broadcast message 2, ..., and a broadcast message N at the rear, the fixed position may be a position after the broadcast message 2 and before the broadcast message 3. Since the broadcast message sent by the currently operated sender is not placed onto the rear of the message queue, the response speed for the broadcast message is also increased, thereby improving user operation.

In at least one alternative embodiment, the fixed position is a position next to another broadcast message of the message queue which has been sent by the currently operated sender prior to sending of the broadcast message. The currently operated sender may have sent another broadcast message prior to sending of the broadcast message, and the other broadcast message may still wait for distribution. Thus, when the currently operated sender further sends a broadcast message at current time, the broadcast message may be arranged to be next to the other broadcast message which has been sent by the currently operated sender prior to sending of the broadcast message. Thus, the arrangement of the broadcast message may not affect distribution of the other broadcast message sent prior to sending of the broadcast message, and the response speed for the broadcast message is also increased.

In at least one alternative embodiment, the method may further include that placing the broadcast message onto the rear of the message queue based on that the broadcast message is not sent by the currently operated sender, whereby the broadcast message becomes a broadcast message at the rear.

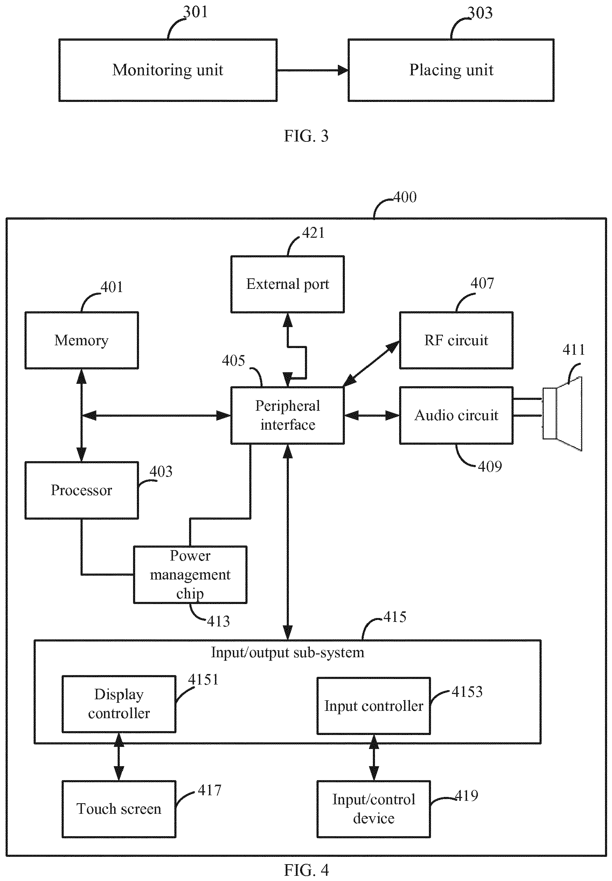

FIG. 3 is a block diagram of a terminal in accordance with an embodiment of the present disclosure. The terminal may include a monitoring unit 301 and a placing unit 303.

The monitoring unit 301 may be configured to monitor broadcasting.

Broadcast messages may be sent by senders of the terminal. The senders may be third-party applications installed in the terminal or system applications such as an alarm clock application, a calendar application, a camera application, and so on. Broadcast messages may be an unlocking broadcast message, a network switch broadcast message, a language switch broadcast message, and so on.

Broadcasting may be monitored by activity manager service (AMS) of the terminal. The AMS is in charge of register of receivers and distribution of broadcast messages. When a sender sends a broadcast message to the AMS, the AMS determines a receiver which needs to receive the broadcast message, and then places the broadcast message onto a message queue corresponding to the receiver. When it is time to distribute the broadcast message, the AMS distributes the broadcast message to the receiver.

In at least one embodiment, the placing unit 303 may be configured to place a broadcast message onto a message queue in a queue-jumping manner based on that the broadcast message is sent by a currently operated sender. The message queue is corresponding to a receiver which needs to receive the broadcast message, and broadcast messages of the message queue are distributed to the receiver sequentially.

When a broadcast message is sent, a sender which sends the broadcast is determined, and then a current display interface of the terminal is acquired. When it is determined that the current display interface is a display interface of the sender, it is determined that the sender is currently operated, for example, the sender may be a third-party application currently operated by a user. When it is determined that the current display interface is not a display interface of the sender, it is determined that the sender is not currently operated, for example, the sender may be a system application such as a calendar application.

In at least one implementation manner, the placing unit 303 may be configured to place the broadcast message onto a position next to the front of the message queue. Thus, after the broadcast message at the front is distributed to the receiver, the broadcast message sent by the currently operated sender will be distributed to the receiver subsequently. Accordingly, the response speed for the broadcast message sent by the currently operated sender is increased, thereby improving user operation.

In at least one alternative implementation manner, the placing unit 303 may be configured to place the broadcast message onto a position other than the front and the rear of the message queue. That is, the broadcast message can be placed onto any position between the front and the rear of the message queue. For example, when the message queue includes a broadcast message 1 at the front, a broadcast message 2 next to the broadcast message 1, a broadcast message 3 next to the broadcast message 2, ..., and a broadcast message N at the rear, the broadcast message can be placed onto a position after the broadcast message 2 and before the broadcast message 3. Since the broadcast message sent by the currently operated sender is not placed onto the rear of the message queue, the response speed for the broadcast message is also increased, thereby improving user operation.

In at least one alternative implementation manner, the placing unit 303 may be configured to place the broadcast message onto a position next to another broadcast message of the message queue which has been sent by the currently operated sender prior to sending of the broadcast message. The currently operated sender may have sent another broadcast message prior to sending of the broadcast message, and the other broadcast message may still wait for distribution. Thus, when the currently operated sender further sends a broadcast message at current time, the broadcast message may be arranged to be next to the other broadcast message which has been sent by the currently operated sender prior to sending of the broadcast message. Thus, the arrangement of the broadcast message may not affect distribution of the other broadcast message sent prior to sending of the broadcast message, and the response speed for the broadcast message is also increased.

In at least one alternative embodiment, the placing unit 303 may be further configured to place the broadcast message onto the rear of the message queue based on that the broadcast message is not sent by the currently operated sender, whereby the broadcast message becomes a broadcast message at the rear of the message queue.

In at least one alternative embodiment, the placing unit 303 may be configured to place a broadcast message onto a fixed position of the message queue based on that the broadcast message is sent by the currently operated sender.

In at least one implementation manner, the fixed position is a position next to the front of the message queue. Thus, after the broadcast message at the front is distributed to the receiver, the broadcast message will be distributed to the receiver subsequently. Accordingly, the response speed for the broadcast message sent by the currently operated sender is increased, thereby improving user operation.

In at least one alternative implementation manner, the fixed position is a position other than the front and the rear of the message queue. For example, when the message queue includes a broadcast message 1 at the front, a broadcast message 2 next to the broadcast message 1, a broadcast message 3 next to the broadcast message 2, ..., and a broadcast message N at the rear, the fixed position may be a position after the broadcast message 2 and before the broadcast message 3. Since the broadcast message sent by the currently operated sender is not placed onto the rear of the message queue, the response speed for the broadcast message is also increased, thereby improving user operation.

In at least one alternative implementation manner, the fixed position is a position next to another broadcast message of the message queue which has been sent by the currently operated sender prior to sending of the broadcast message. The currently operated sender may have sent another broadcast message prior to sending of the broadcast message, and the other broadcast message may still wait for distribution. Thus, when the currently operated sender further sends a broadcast message at current time, the broadcast message may be arranged to be next to the other broadcast message which has been sent by the currently operated sender prior to sending of the broadcast message. Thus, the arrangement of the broadcast message may not affect distribution of the other broadcast message sent prior to sending of the broadcast message, and the response speed for the broadcast message is also increased.

It shall be noted that the terminal described in the device embodiment of the present disclosure is illustrated in the form of functional units. The term "unit" used herein shall be taken in the broadest possible sense. Objects for realizing the function of each unit may be an application specific integrated circuit (ASIC), a single circuit, a processor (shared, specific, or chipset) for executing one or more software or hardware procedures in a memory, a combined logic circuit, and/or other appropriate assembly for realizing the above function.

FIG. 4 is a structural diagram of a terminal in accordance with an embodiment of the present disclosure. The terminal 400 may include a memory 401 and a processor 403. The memory 401 stores computer-readable program codes. The memory 401 may be a random access memory, a nonvolatile memory, a disk, and so on. The processor 403 may be configured to invoke the computer-readable program codes to perform the method illustrated by FIG. 1 or the method illustrated by FIG. 2, which will not be repeated herein. The processor 403 may be further configured to invoke the computer-readable program codes to remove a broadcast message of the message queue after undergoing distribution. That is, when a broadcast message is distributed, the broadcast message is removed from the message queue.

The terminal 400 may further include a peripheral interface 405, a radio frequency (RF) circuit 407, an audio circuit 409, a speaker 411, a power management chip 413, an input/output sub-system 415, a touch screen 417, an input/control device 419, an external port 421, and so on.

The input/output sub-system 415 can couple the touch screen 417 and the input/control device 419 to the peripheral interface 405. The input/output sub-system 415 may include a display controller 4151 and an input controller 4153 which is configured to control the input/control device 419. The input controller 4153 can receive electrical signals from or transmit electrical signals to the input/control device 419. The input/control device 419 may include physical buttons, a sliding switch, a joy stick, and so on. The input controller 4153 may be coupled to a keyboard, a universal serial bus interface, a mouse, and so on.

The touch screen 417 may be a capacitance-type touch screen, a resistance-type touch screen, a surface acoustic wave touch screen, and so on.

The display controller 4151 may receive electrical signals from or transmit electrical signals to the touch screen 417.

The RF circuit 407 may be configured to establish communication between the terminal 400 and a network.

The audio circuit 409 may be configured to receive audio data from the peripheral interface 405, convert the audio data into electrical signals, and transmit the electrical signals to the speaker 411.

While the present disclosure has been described in detail above with reference to the exemplary embodiments, the scope of the present disclosure is not limited thereto. As will occur to those skilled in the art, the present disclosure is susceptible to various modifications and changes within the scope of the invention as determined by the appended claims.

## Claims

1. A method for monitoring broadcast messages in a terminal (400), the monitoring being carried out by an activity manager service of the terminal (400), comprising:
monitoring broadcasting (210) of different senders in the terminal (400), the senders being third-party applications in the terminal (400) or system applications in the terminal (400);
determining whether a sender currently sending a broadcast message is a currently operated sender; and
placing the broadcast message onto a fixed position (212) of a message queue based on determining that the sender currently sending the broadcast message is the currently operated sender, wherein the fixed position is a position before the rear of the message queue, wherein the message queue corresponds to a receiver which needs to receive the broadcast message, wherein the receiver is an application in the terminal (400), and wherein the broadcast messages in the message queue are distributed to the receiver sequentially.

2. The method of claim 1, wherein the fixed position is a position next to the front of the message queue.

3. The method of claim 1, wherein the fixed position is a position other than the front and the rear of the message queue.

4. The method of claim 1, wherein the fixed position is a position next to another broadcast message of the massage queue, wherein the other broadcast message has been sent by the currently operated sender prior to sending of the broadcast message.

5. The method of any of claims 1-4, further comprising:
placing the broadcast message onto the rear of the message queue based on determining that the sender currently sending the broadcast message is not the currently operated sender.

6. The method of any of claims 1-5, **characterized in that** a sender is determined to be currently operated based on that a current display interface of a terminal is a display interface of the sender.

7. A terminal (400) comprising:
a memory (401) configured to store computer-readable program codes; and
a processor (403) configured to invoke the computer-readable program codes to execute all the steps of the method of any of claims 1-6.

8. The terminal of claim 7, wherein the processor (403) is further configured to invoke the computer-readable program codes to remove a broadcast message of the message queue after undergoing distribution.

## Patentansprüche

1. Verfahren zur Überwachung von Broadcast-Nachrichten in einem Endgerät (400), wobei die Überwachung durch einen Aktivitätsverwaltungsdienst des Endgeräts (400) durchgeführt wird, der Folgendes umfasst:
das Überwachen des Broadcasting (210) von unterschiedlichen Sendern in dem Endgerät (400), wobei die Sender Drittanbieter-Anwendungen in dem Endgerät (400) oder Systemanwendungen in dem Endgerät (400) sind;
das Bestimmen, ob ein Sender, der derzeit eine Broadcast-Nachricht sendet, ein derzeit betriebener Sender ist; und
Platzieren der Broadcast-Nachricht auf eine Fixposition (212) einer Nachrichtenwarteschlange, auf Basis der Bestimmung, dass der Sender, der derzeit eine Broadcast-Nachricht sendet, der derzeit betriebene Sender ist, wobei die Fixposition eine Position vor dem Ende der Nachrichtenwarteschlange ist, wobei die Nachrichtenwarteschlange einem Empfänger entspricht, der die Broadcast-Nachricht empfangen soll, wobei der Empfänger eine Anwendung in dem Endgerät (400) ist und wobei die Broadcast-Nachrichten in der Nachrichtenwarteschlange nacheinander an den Empfänger übertragen werden.

2. Verfahren nach Anspruch 1, wobei die Fixposition eine Position unmittelbar nach dem Anfang der Nachrichtenwarteschlange ist.

3. Verfahren nach Anspruch 1, wobei die Fixposition eine andere Position als der Anfang und das Ende der Nachrichtenwarteschlange ist.

4. Verfahren nach Anspruch 1, wobei die Fixposition eine Position neben einer anderen Broadcast-Nachricht der Nachrichtenwarteschlange ist, wobei die andere Broadcast-Nachricht von dem derzeit betriebenen Sender vor dem Senden der Broadcast-Nachricht gesendet wurde.

5. Verfahren nach einem der Ansprüche 1 bis 4, das ferner Folgendes umfasst:
Platzieren der Broadcast-Nachricht an das Ende der Nachrichtenwarteschlange auf Basis des Bestimmens, dass der Sender, der derzeit die Broadcast-Nachricht sendet, nicht der derzeit betriebene Sender ist.

6. Verfahren nach einem der Ansprüche 1 bis 5, **dadurch gekennzeichnet, dass** die Bestimmung, dass ein Sender derzeit betrieben wird, auf Basis dessen erfolgt, dass eine derzeitige Anzeigeschnittstelle eines Endgeräts eine Anzeigeschnittstelle des Senders ist.

7. Endgerät (400), das Folgendes umfasst:
einen Speicher (401), der konfiguriert ist, um die rechnerlesbaren Programm-Codes zu speichern; und
einen Prozessor (403), der konfiguriert ist, um die rechnerlesbaren Programm-Codes aufzurufen, um alle Schritte eines Verfahrens nach einem der Ansprüche 1 bis 6 durchzuführen.

8. Endgerät nach Anspruch 7, wobei der Prozessor (403) ferner konfiguriert ist, um die rechnerlesbaren Programm-Codes aufzurufen, um eine Broadcast-Nachricht nach der Übertragung aus der Nachrichtenwarteschlange zu entfernen.

## Revendications

1. Procédé de surveillance de messages diffusés dans un terminal (400), la surveillance étant effectuée par un service de gestion d'activité du terminal (400), comprenant les étapes consistant à :
surveiller la diffusion (210) de différents expéditeurs dans le terminal (400) ; les expéditeurs étant des applications tierces dans le terminal (400) ou des applications de système dans le terminal (400) ;
déterminer si un expéditeur envoyant actuellement un message de diffusion est un expéditeur actuellement utilisé, et
placer le message de diffusion sur une position fixe (212) d'une file d'attente de messages sur la base de la détermination que l'expéditeur envoyant actuellement le message de diffusion est l'expéditeur actuellement utilisé, dans lequel la position fixe est une position située avant l'arrière de la file d'attente de messages, dans lequel la file d'attente de messages correspond à un récepteur qui doit recevoir le message de diffusion, dans lequel le récepteur est une application dans le terminal (400), et dans lequel les messages de diffusion dans la file d'attente de messages sont distribués au récepteur de manière séquentielle.

2. Procédé selon la revendication 1, dans lequel la position fixe est une position proche de l'avant de la file d'attente de messages.

3. Procédé selon la revendication 1, dans lequel la position fixe est une position autre que l'avant et l'arrière de la file d'attente de messages.

4. Procédé selon la revendication 1, dans lequel la position fixe est une position à côté d'un autre message de diffusion de la file d'attente de messages, dans lequel l'autre message de diffusion a été envoyé par l'expéditeur actuellement utilisé avant l'envoi du message de diffusion.

5. Procédé selon l'une quelconque des revendications 1 à 4, comprenant en outre l'étape consistant à :
placer le message à diffuser à l'arrière de la file d'attente de messages sur la base de la détermination que l'expéditeur qui envoie actuellement le message de diffusion n'est pas l'expéditeur actuellement utilisé.

6. Procédé selon l'une quelconque des revendications 1 à 5, **caractérisé en ce qu'**un expéditeur est déterminé comme étant actuellement utilisé sur la base du fait qu'une interface d'affichage actuelle d'un terminal est une interface d'affichage de l'expéditeur.

7. Terminal (400) comprenant :
une mémoire (401) configurée pour stocker des codes de programme lisibles par ordinateur ; et
un processeur (403) configuré pour appeler les codes de programme lisibles par ordinateur afin d'exécuter toutes les étapes du procédé selon l'une quelconque des revendications 1 à 6.

8. Terminal selon la revendication 7, dans lequel le processeur (403) est en outre configuré pour appeler les codes de programme lisibles par ordinateur afin de supprimer un message de diffusion de la file d'attente de messages après avoir été distribué.
